# EUROPÄISCHE PATENTANMELDUNG

(11) **EP 1 964 791 A1**
(43) Veröffentlichungstag der Anmeldung: **03.09.2008**
(21) Anmeldenummer: 08101815.2
(22) Anmeldetag: 21.02.2008
(51) Int. Cl.: B65D 88/10, B65D 88/76, B65D 90/00

(54) **Behälter**

(30) Priorität: 01.03.2007 DE 102007010045
(71) Anmelder: ACO SEVERIN AHLMANN GMBH & CO. KG, 24768 Rendsburg (DE)
(72) Erfinder:
(74) Vertreter: Bohnenberger, Johannes

(57) **Zusammenfassung**

Vorliegende Erfindung betrifft einen Behälter, insbesondere Kunststoffbehälter zur Lagerung von Heizöl oder ähnlichen Fluiden, mit Behälterwandungen (4), die einen Bchälterinneraum (6) begrenzen, wobei wenigstens zwei Aufnahmeabschnitte (16), von denen jeder jeweils an einer Innenseite (8) von zwei sich im Wesentlichen gegenüberliegenden Behälterwandungen (4) ausgebildet ist, zur insbesondere lösbaren Aufnahme eines zwischen den beiden Aufnahmeabschnitten (16) verlaufenden Stabilisicrungsclcmcntcs (40), insbesondere Zugankers.

## Beschreibung

Vorliegende Erfindung betrifft einen Behälter, insbesondere zur Lagerung von Heizöl oder ähnlichen Fluiden, mit Behälterwandungen, die einen Behälterinnenraum begrenzen.

Genannte Behälter sind aus dem Stand der Technik bekannt. Sie dienen unter anderem in Form von Tanks zur Lagerung von Heizölen, Benzin oder aber auch Regenwasser, Trinkwasser oder ähnlichen Fluiden. Meist werden sie aus einem Kunststoff hergestellt, wobei je nach Material bekannte Verfahren wie das Spritzgussverfahren, thermoplastische Herstellungsverfahren oder aber auch Formpressverfahren ihre Anwendung finden. Prinzipiell sind die genannten Behälter sowohl als geschlossene Behälter als auch als offene Behälter in Form von Wannen, mit und ohne Zugangs- und Einstiegsöffnungen ausführbar.

Je größer solche Behälter sind, desto größer ist auch der Bedarf, insbesondere bei sehr dünnwandigen Ausführungen, die Behälter so auszusteifen, dass sie auch bei vollständiger Füllung ihre Form behalten. Diesbezüglich sind gemäß dem Stand der Technik im Wesentlichen drei unterschiedliche Behälterausführungen bekannt.

Zum einen werden genannte Behälter an der Außenseite mit einem oder mehreren umlaufenden Ringankern versehen, die auftretende Verformungskräfte abfangen. Bisweilen werden dazu an der Behälterwandung entsprechende, ebenfalls wenigstens teilweise umlaufende Einbuchtungen vorgesehen, in die dann der oder die Zuganker eingelegt und befestigt werden können. Diese Montage der Ringanker ist jedoch aufgrund der zwangsläufig geschlossen, d. h. also vollständig umlaufenden Ringankeranordnung sehr aufwendig und teuer.

Eine weitere Möglichkeit die Formstabilität eines solchen Behälters zu garantieren, besteht in der Montage von quer durch den Behälterinnenraum laufenden Zugankern. Diese werden nach der Herstellung des Rohbehälters über entsprechende Bohrungen an der Behälterwandung durch den Behälterinnenraum geführt und an den im Wesentlichen gegenüberliegenden Behälterwandungen befestigt. Die Durchdringungen des Zugankers an der Behälterwandung werden dann nach der Fixierung der Zuganker abgedichtet. Gerade aber diese Abdichtung ist sehr aufwendig und birgt darüber hinaus, trotz gewissenhafter Ausführung stets die Gefahr von Leckagen, was gerade bei der Lagerung von Gefahrengütern, wie Heizöl und Benzin ein hohes Gefahrenpotential bedeutet.

Eine dritte Ausführungsform, die hauptsächlich bei Kunststoffbehältern angewendet wird, die im Rotationsverfahren hergestellt werden, ist die Ausführung von Wandverbindungen der sich im Wesentlichen gegenüberliegenden Behälterwandungen. Dazu werden an bestimmten Bereichen die sich gegenüberliegenden Behälterwandungen miteinander verbunden, sodass sich beispielsweise Stege bilden, die als Zuganker fungieren. Jedoch ist dieses Herstellverfahren sehr aufwendig und darüber hinaus nur für geringe Belastungen geeignet.

Vorliegender Erfindung liegt folglich die Aufgabe zugrunde, einen Behälter der zuvor genannten Art mit einer verbesserten, effektiveren und darüber hinaus kostengünstigen Bauweise darzubieten, die insbesondere in Hinsicht auf die Formstabilität des Behälters Vorteile gegenüber dem Stand der Technik bietet.

Vorliegende Aufgabe wird durch einen Behälter gemäß Patentanspruch 1 gelöst.

Insbesondere wird diese Aufgabe also durch einen Behälter, insbesondere zur Lagerung von Heizöl oder ähnlichen Fluiden gelöst, mit Behälterwandungen, die einen Behälterinnenraum begrenzen, wobei wenigstens zwei Aufnahmeabschnitte, von denen jeder jeweils an einer Innenseite von zwei sich im Wesentlichen gegenüberliegenden Behälterwandungen ausgebildet ist, vorgesehen sind, zur insbesondere lösbaren Aufnahme eines zwischen den beiden Aufnahmeabschnitten verlaufenden Stabilisierungselementes, insbesondere Zugankers.

Ein wesentlicher Vorteil eines derart ausgeführten Behälters liegt darin, dass die Aufnahmeabschnitte zur Anordnung bzw. Montage der Stabilisierungselemente bzw. Zuganker an der Innenseite des Behälters so angeordnet sind, dass ein Zuganker ohne eine Schädigung der Behälterwandungen montierbar ist. Das sehr aufwendige und darüber hinaus risikoreiche Montieren von Zugankern über Bohrungen und das nachträgliche Abdichten an der Behälterwandung entfällt somit.

Darüber hinaus sind die Zuganker, insbesondere lösbar an den Aufnahmeabschnitten am Behälter anordbar, so dass je nach Bedarf ein Behälter flexibel mit einem oder mehreren Stabilisierungselementen versehen werden kann. Natürlich ist es hier auch möglich die Zahl der Aufnahmeabschnitte an jeder Behälterwandung in Abhängigkeit der zu erwartenden Belastungen, der Dicke und des Materials der Behälterwandungen abzustimmen. Prinzipiell ist es dabei auch möglich die Zuganker bzw. die Aufnahmeabschnitte nicht nur zwischen sich im Wesentlichen gegenüberliegenden Behälterwandungen, sondern auch zwischen Behälterwandungen vorzusehen, die im stumpfen, im spitzen oder in einem anderen Winkel zueinander angeordnet sind. Diesbezüglich sei erwähnt, dass der erfindungsgemäße Behälter natürlich jede denkbare Form, sei es eine Rechteckform, eine Tropfenform oder eine Kugelform, etc. aufweisen kann.

Natürlich ist es in diesem Zusammenhang auch möglich die Stabilisierungselemente und die Aufnahmeabschnitte im Inneren des Behälters so anzuordnen, dass sie nicht als Zuganker sondern als Druckelemente fungieren, um beispielsweise eine von außen auf den Behälter wirkende Belastung abzufangen.

Vorzugsweise weist der Aufnahmeabschnitt ein von der Innenseite der Behälterwandung beabstandetes Bügelelement auf, das von einem komplementär ausgebildeten Hakenelement des Zugankers bzw. des Stabilisierungselementes wenigstens teilweise umgreifbar ist. Dieses Bügelelement kann beispielsweise ein Stabelement sein, dass an seinen beiden Enden über entsprechende Montageabschnitte an der Behälterwandung angebunden ist. Vorzugsweise erfolgt dabei die Ausbildung des Bügelelementes integral mit der Behälterwandung, sodass keine zusätzlichen Montageschritte zum Anbringen des Bügelelementes nötig sind. Insbesondere bei der Ausbildung des Behälters als ein mittels eines Schleudergussverfahrens hergestellter Kunststoffbehälter ist diese Ausführungsform schnell und kostengünstig realisierbar. Natürlich sind neben der Ausbildung von Bügelelementen aber auch andere aus dem Stand der Technik bekannten Verfahren zur Befestigung des Stabilisierungselementes innerhalb des Behälters denkbar.

Vorzugsweise ist das Bügelelement zwischen zwei benachbarten Einbuchtungen der Behälterwandung und insbesondere zwischen zwei sich gegenüberliegenden Stirnseiten dieser Einbuchtungen ausgebildet. Unter Einbuchtungen sind hier solche Abschnitte an der Behälterwandung zu verstehen, die in den Behälterinnenraum hineinragen. Die Kombination dieser Einbuchtungen und dem zuvor genannten Bügelelement hat zum einen den Vorteil, dass die Einbuchtungen für sich schon eine Versteifung des Behälters bewirken, zum anderen aber auch den sehr einfachen Anschluss der Bügelelemente am Behälter ermöglichen, wobei hier besonders vorteilhaft die integrale Ausbildung zwischen Behälterwandungen bzw. Einbuchtungen und Bügelelementen möglich ist.

Vorzugsweise ist das Bügelelement ein Hülsenelement, dessen Hülsenwandung integral mit der Behälterwandung bzw. den zuvor genannten Einbuchtungen oder deren Stirnseiten verbunden ist und dessen Hülseninnenraum eine von der Außenseite des Behälters zugängliche Ringankerdurchführung bildet. Das bedeutet also, dass die Hülsenwandung des als Hülsenelement ausgeführten Bügelelementes, beispielsweise bei der Herstellung des Behälters mittels Schleudergussverfahren integral mit der Behälterwandung bzw. der Einbuchtung oder dessen Stirnseitenwänden ausgebildet wird. Diesbezüglich ist es beispielsweise möglich an eine Schleudergussaußenform entsprechende Hülseninnenraumformen anzubringen, die dann während des Schleudergussverfahrens zusammen mit den Innenseiten der Schleudergussform vom Schleudergussmaterial, beispielsweise einem Kunststoff, überzogen werden. Nach dem Ausschalen und insbesondere nach dem Entfernen der Hülseninnenraumform bildet sich so ein Bügelelement, dass integral mit der Behälterwandung verbunden ist und das einen von einer Außenseite des Behälters zugänglichen Hülseninnenraum bzw. eine durch diesen Hülseninnenraum gebildete Durchführung bietet.

Der Vorteil eines derart, vorzugsweise parallel zur Behälterwandung ausgeführten, mit einem Hülseninnenraum versehenen Bügelelementes liegt darin, dass dieses der Aufnahme eines Ringankers von der Außenseite des Behälters dienen kann. Unter Ringanker wird hier nicht nur ein den Behälter vollständig umlaufendes Stabilisierungselement, sondern auch ein nur teilweise entlang der Behälterwand geführter Stabanker verstanden, wobei hier jegliche erdenkbare Form des Ankers, also stabförmig, plattenförmig, komplementär zur Außenseite der Behälterwandung etc. realisierbar ist.

Durch das Anordnen eines solchen Ankers bzw. Ringankers innerhalb der durch das Hülsenelement dargebotenen Ringankerdurchführung an der Außenseite des Behälters kann die Belastung, die auf das Bügelelement von der Innenseite des Behälters wirkt, und natürlich auch umgekehrt, bei Bedarf deutlich erhöht werden.

Es ist so weiter möglich den erfindungsgemäßen Behälter sowohl ohne Stabilisierungselemente bzw. Zuganker auf der Innenseite auszuführen, oder aber auch die Zuganker vorzusehen und schließlich, sollte dies zusätzlich erforderlich sein, durch die auf der Außenseite angeordnete Ringankerdurchführung einen entsprechenden Ringanker anzuordnen und so die Belastbarkeit des Behälters zusätzlich zu erhöhen.

Sind die Einbuchtungen der Behälterwandung auf der Außenseite des Behälters als den Behälter entlang einer Erstreckungsachse wenigstens teilweise umlaufende Ringankeraufnahmen ausgebildet, kann so ein durch die zuvor beschriebenen Ringankerdurchführungen geschobenes Ringankerelement sehr einfach und effektiv am Behälter befestigt werden. Kräfte, die über das Bügelelement auf den Ringanker wirken, werden so effektiv auf die benachbarten angeordneten Einbuchtungen bzw. die darin ausgebildeten Ringankeraufnahmen abgeleitet. Da wie zuvor bereits erwähnt schon die Ausführung von Einbuchtungen in der Gehäusewand eine Stabilisierung des Behälters bewirkt, ist durch die zusätzlichen Ringanker auf der Außenseite bzw. die Stabilisierungselemente auf der Innenseite eine sichere und effektive Lastableitung gewährleistet.

Unter umlaufend wird hier eine, der Behälterwandung im Wesentlichen parallele und sich in eine bestimmte Richtung erstreckende Ausrichtung des entsprechenden Elementes verstanden. Bezüglich einer ebenen Behälterwandung bedeutet umlaufend also, dass beispielsweise die Einbuchtung über einen gewissen Bereich der Behälterwandung folgt. Ist dagegen der Behälter ein kugelförmiger Behälter oder weist der Behälter Ecken auf, kann umlaufend auch bedeuten, dass die Einbuchtung der aus der Behälterform resultierenden Krümmung folgt.

Werden im Wechsel mehrere Einbuchtungen und mehrere mit Hülsenelementen versehene Bügelelemente an der Behälterwandung angeordnet, können so auch großflächige Behälterwandungen sicher versteift werden, indem entsprechend lange Ringanker an der Außenseite des Behälters montiert werden, die ein oder mehrere Bügelelemente bzw. Hülsenelemente durchlaufen und mit den im Inneren des Behälters angeordneten Stabilisierungselementen bzw. Ringankern in Wirkverbindung stehen.

In diesem Zusammenhang ist es natürlich auch möglich, den an der Außenseite des Behälters angeordneten Ringanker als voll umlaufenden Ringanker zu versehen, wobei hier die Ausbildung der in Abständen angeordneten Ringankerdurchführungen auf der Außenseite des Behälters eine sichere Fixierung des Ringankers am Behälter garantiert. Bei besonders großen zu erwartenden Lasten kann dann natürlich zusätzlich der rundumlaufende Ringanker auf der Innenseite des Behälters mittels der zuvor genannten Stabilisierungselemente zusätzlich formstabilisiert werden.

Vorzugsweise ist zwischen zwei benachbarten Einbuchtungen der Behälterwandung, also vorzugsweise in dem Bereich, in dem der Aufnahmeabschnitt bzw. das Bügelelement ausgebildet ist, auch eine Ausbuchtung der Behälterwandung vorgesehen, wobei dann insbesondere das Bügelelement auf der Innenseite des Behälters wenigstens teilweise zwischen den Seitenwänden dieser Ausbuchtung ausgebildet sein kann. Auf diese Weise kann durch die mäandernde Ausführung zwischen Einbuchtung und Ausbuchtung eine sehr hohe Grundstabilisierung des Behälters erreicht werden. Darüber hinaus ermöglicht der Wechsel zwischen Einbuchtung und Ausbuchtung und die optionale Ausbildung des Bügelelementes sowohl im Bereich der Stirnseitenwände der Einbuchtung als auch im Bereich der Seitenwände der Ausbuchtung die Reduzierung der jeweiligen Stirnseitenwand- bzw. Seitenwandhöhen der Einbuchtung bzw. der Ausbuchtung, wodurch die Knickgefahr dieser Wandbereiche insbesondere aufgrund der auf sie wirkenden Normalkräfte reduziert wird. Generell, aber besonders in diesem Zusammenhang ist es daher zudem vorteilhaft, wenn die Seitenwände der Ausbuchtung im Wesentlichen stetig in die Stirnseitenwände der Einbuchtungen übergehen.

Vorzugsweise ist die Ausbuchtung als eine, insbesondere orthogonal zur Erstreckungsachse der Einbuchtungen, den Behälter wenigstens teilweise umlaufende Versteifungsrippe ausgebildet. Solche Versteifungsrippen sind aus dem Stand der Technik bekannt und dienen hier in Kombination mit den im Inneren angeordneten Stabilisierungselementen und den auf der Außenseite angeordneten Ringankern einer zusätzlichen Aussteifung des Behälters. Darüber hinaus ist es denkbar diese Versteifungsrippen zusätzlich zu Behälterfüßen auszubilden, um die Standfestigkeit des Behälters zu erhöhen oder aber auch als Verbindungsrippen, um mehrere Behälter zu Behälterbatterien anzuordnen.

Natürlich ist es aber auch möglich, dass die als Versteifungsrippe ausgeführte Ausbuchtung in einem spitzen oder stumpfen Winkel zu den Einbuchtungen angeordnet ist. In diesem Zusammenhang können natürlich auch mehrere Ausbuchtungen, beispielsweise netzartig den Behälter wenigstens teilweise oder vollständig umlaufen, wodurch eine sehr effektive Versteifung des Behälters erzielt wird.

Weitere Ausführungsformen der Erfindung ergeben sich aus den Unteransprüchen.

Im Folgenden wird die Erfindung anhand eines Ausführungsbeispiels beschrieben, dass anhand der beiliegenden Zeichnungen näher erläutert wird. Hierbei zeigen:
Fig. 1 eine isometrische Darstellung einer ersten Ausführungsform des Behälters ohne Ringanker von schräg oben;
Fig. 2 eine isometrische Darstellung der Ausführungsform aus Fig. 1 mit eingesetztem Ringanker von schräg oben;
Fig. 3 eine isometrische Darstellung der Ausführungsform aus Fig. 1 mit eingesetztem Ringanker von schräg unten;
Fig. 4 eine Vorderansicht der Ausführungsform aus Fig. 1 mit eingesetztem Ringanker;
Fig. 5 eine isometrische Darstellung eines Horizontalschnitt durch die Ausführungsform aus Fig. 1 mit eingesetztem Ringanker;
Fig. 6 eine Detailansicht der Darstellung aus Fig. 5;
Fig. 7 eine Detailansicht der Ausführungsform aus Fig. 1 ohne Ringanker;
Fig. 8 die Detailansicht aus Fig. 7 mit eingesetztem Ringanker;
Fig. 9 bis 11 Querschnitte durch die Ausführungsform aus Fig.1 mit eingesetztem Ringanker; und
Fig. 12 einen Horizontalschnitt durch die Ausführungsform aus Fig. 1 mit eingesetztem Ringanker.

Im Folgenden werden für gleiche und gleich wirkende Bauteile dieselben Bezugsziffern verwendet, wobei zur Unterscheidung gleicher Bauteile bisweilen Hochindizes ihre Anwendung finden.

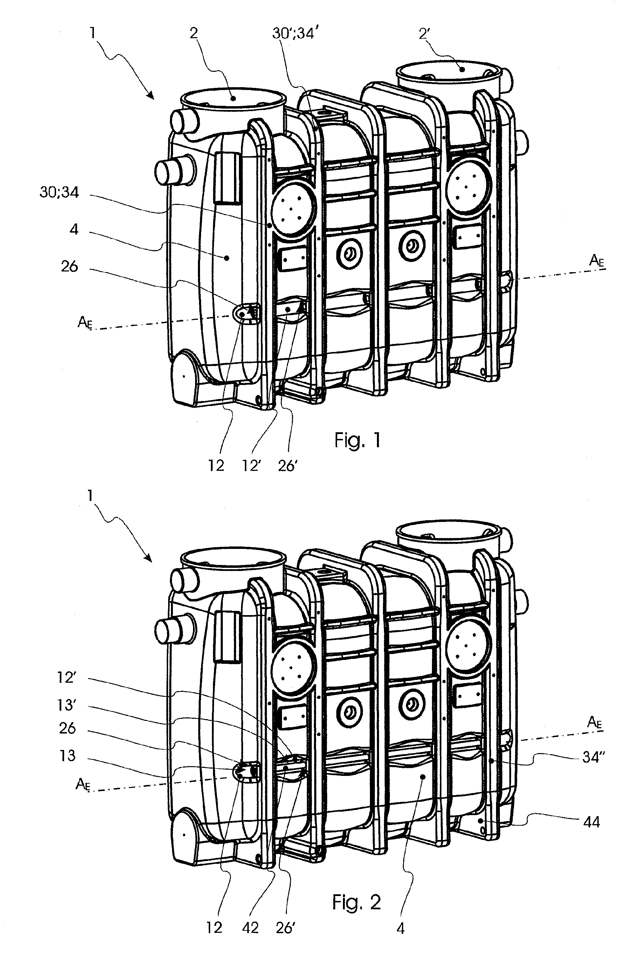

Fig. 1 zeigt eine isometrische Darstellung einer Ausführungsform des erfindungsgemäßen Behälters 1. Dieser Behälter 1 umfasst Behälterwandungen 4, die einen Innenraum (nicht dargestellt) begrenzen. Darüber hinaus umfasst der Behälter 1 zwei Zugangsöffnungen 2, die den Zugang zum Behälterinnenraum erlauben.

Der Behälter 1 ist hier als ein Kunststoffbehälter ausgeführt, bei dem zur Aussteifung Versteifungsrippen 34 in Form von Ausbuchtungen 30 an den Behälterwandungen 4 vorgesehen sind, die sich entlang einer Erstreckungsachse A_{A} erstrecken. Die Ausbuchtungen 30 bzw. die Versteifungsrippen 34 ragen an der Außenseite 10 des Behälters 1 aus der Gehäusewandung 4 heraus.

Zudem weist der Behälter 1, hier in Behälterlängsrichtung verlaufende Einbuchtungen 12 auf, die sich entlang einer Erstreckungsachse A_{E} orthogonal zu den Versteifungsrippen 34 erstrecken. Die Einbuchtungen 12 ragen aus der Gehäusewandung 4 von deren Innenseite 8 in den Behälterinnenraum 6 hinein. Natürlich ist die hier ausgeführte gegenseitige Ausrichtung dieser Einbuchtungen 12 bzw. Versteifungsrippen 34 eine von mehreren möglichen Ausführungsmöglichkeiten und nicht auf die hier gezeigte orthogonale Ausrichtung festgelegt.

In den Bereichen, in denen die Einbuchtungen 12 auf die Versteifungsrippen 34 bzw. die Ausbuchtungen 30 treffen, ist jeweils eine Ringankerdurchführung 26 vorgesehen, sodass die einzelnen Einbuchtungen 12 über diese Ringankerdurchführungen 26 miteinander in Verbindung stehen.

Durch die Ausbildung der Einbuchtungen 12 und der Versteifungsrippen 34 weist der Behälter 1 von Haus aus eine sehr hohe Grundstabilität auf, sodass er beim Auffüllen des Behälterinnenraumes 6 aller Voraussicht nach nur eine sehr geringe Verformung aufweisen wird. Auch bei Belastungen die von außen auf die Behälterwandungen 4 wirken, tragen die Einbuchtungen 30 und die Versteifungsrippen 34, natürlich je nach verwendetem Material und Materialdicke zu einer akzeptablen Stabilität und Verformungsfestigkeit bei.

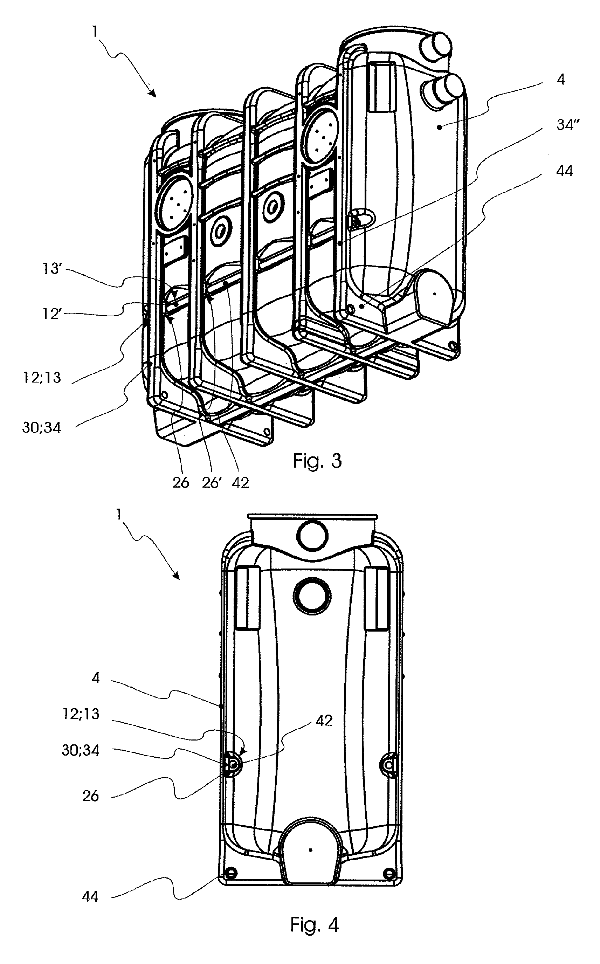

In den Fig. 2 bis 4 ist dieselbe Ausführungsform des Behälters 1 nun mit einem in die Einbuchtungen 12 und die Ringankerdurchführungen 26 eingesetzten Ringanker 42 dargestellt. Dieser Ringanker 42 erstreckt sich hier entlang der gesamten Gehäusewand 4 des Behälters 1, parallel zur Erstreckungsachse A_{E} der Einbuchtungen 12. Dieser Ringanker 42 ist beispielsweise ein Stabstahl, der komplementär zur Größe bzw. dem Durchmesser der Ringankerdurchführung 26 an den jeweiligen Versteifungsrippen 34 ausgebildet ist, so dass eine im wesentlichen spielfreie Aufnahme des Ringankers 42 in seiner durch die Ringankerdurchführung 26 und die Einbuchtungen 12 gebildete Lagerung gewährleistet ist.
Wie gesagt, sind dazu die Einbuchtungen 12 an der Behälterwandung 4 des Behälters 1 ebenfalls in Form von Ringankeraufnahmen 13 so ausgebildet, dass sie den Ringanker 42 aufnehmen bzw. führen können. Dabei können diese Ringankeraufnahmen 13 so ausgebildet sein, dass sie am Ringanker 42 anstehen oder aber auch so ausgebildet sein, dass zwischen Ringanker 42 und Ringankeraufnahme 13 ein Spalt gebildet wird.

Bei dieser Ausführungsform bilden die Versteifungsrippen 34 darüber hinaus Behälterfüße 44, die der stabilen Lagerung des Behälters 1 dienen. In diesem Zusammenhang ist es natürlich auch möglich an den Versteifungsrippen 34 entsprechende Verbindungselemente vorzusehen oder diese als solche auszubilden, um beispielsweise mehrere Behälter miteinander zu Behälterbatterien zu verbinden.

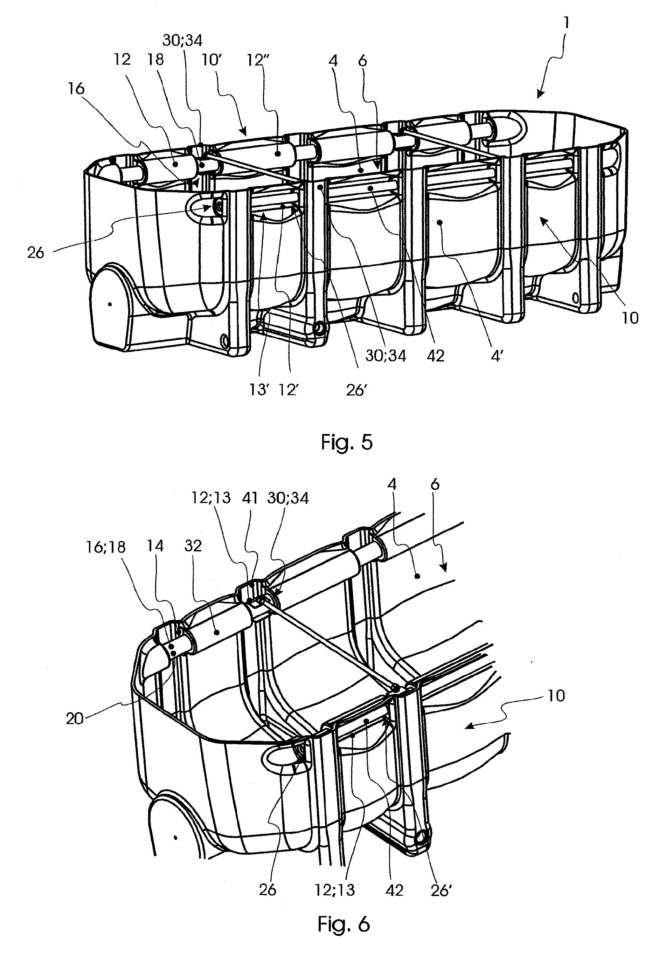

Die Fig. 5 und 6 zeigen die zuvor beschriebene Ausführungsform des erfindungsgemäßen Behälters 1 nun in einer horizontal geschnittenen isometrischen Darstellung, wobei Fig. 5 eine Gesamtansicht und Fig. 6 einen Detailausschnitt dieser Gesamtansicht bietet. Dargestellt sind die Einbuchtungen 12 der Behälterwandung 4, die in den Behälterinnenraum 6 hineinragen, und die Ausbuchtungen 30 bzw. Versteifungsrippen 34 die aus diesem herausragen.

An der Außenseite 10 des Behälters 1 ist wiederum der Ringanker 42 erkennbar, der in die Einbuchtungen 12 bzw. in die durch diese gebildeten Ringankeraufnahmen 13 und die Ringankerdurchführungen 26 der Ausbuchtungen 30 eingesetzt ist.

Zwischen benachbarten Einbuchtungen (hier beispielsweise gekennzeichnet durch die Bezugszeichen 12, 12") ist jeweils ein Aufnahmeabschnitt 16 angeordnet, der der Aufnahme eines Stabilisierungselementes 40, in diesem Fall eines Zugankers 40 dient. Die Aufnahmeabschnitte 16 sind bei dieser Ausführungsform an sich gegenüberliegenden Behälterwandungen 4 so angeordnet, dass nach dem Einsetzen des Zugankers 40, eine Zugaussteifung der sich gegenüberliegenden Behälterwandungen 4 resultiert.

Die Aufnahmeabschnitte 16 werden hierbei durch Bügelelemente 18 gebildet, die zwischen den benachbarten Einbuchtungen 12 angeordnet sind. Bei dieser Ausführungsform sind diese Bügelelemente 18 als Hülsenelemente 20 (siehe im folgenden Figs. 6-8) ausgeführt und integral mit Stirnseitenwänden 14 der Einbuchtungen 12 bzw. den Seitenwänden 32 der Ausbuchtungen 30 verbunden. Auf diese Weise ist das Bügelelement 18 im Aufnahmeabschnitt 16 derart von der Behälterwandung 4 beabstandet, dass es von einem Hakenelement 41 des Zugankers 40 umgreifbar ist, wodurch eine einfache und sichere Fixierung des Stabilisierungselementes 40 garantiert wird.

Der Vorteil der integralen Ausbildung der Bügelelemente 18 mit den Behälterwandungen 4 liegt darin, dass keine Durchdringungen am Behälter 1 bzw. an dessen Behälterwandung 4 vorgesehen werden müssen. Insofern ist, wie dies beim Stand der Technik der Fall ist, keine risikobehaftete Abdichtung dieser Durchdringungen nötig. Darüber hinaus ermöglicht die erfindungsgemäße Ausbildung der Bügelelemente 18 die optionale Montage der Zuganker 40 bzw. der Stabilisierungselemente 40, also nach Bedarf. Beispielsweise ist bei dieser Ausführungsform pro Behälterwandung 4 des Behälters 1 nur jeder zweite Aufnahmeabschnitt 16 mit einem Stabilisierungselement 40 versehen. Sind am Behälter 1 höhere Lasten zu erwarten, können auch die zur Zeit nicht besetzten Aufnahmeabschnitte 16 mit einem entsprechenden Stabilisierungselement 40 versehen werden.

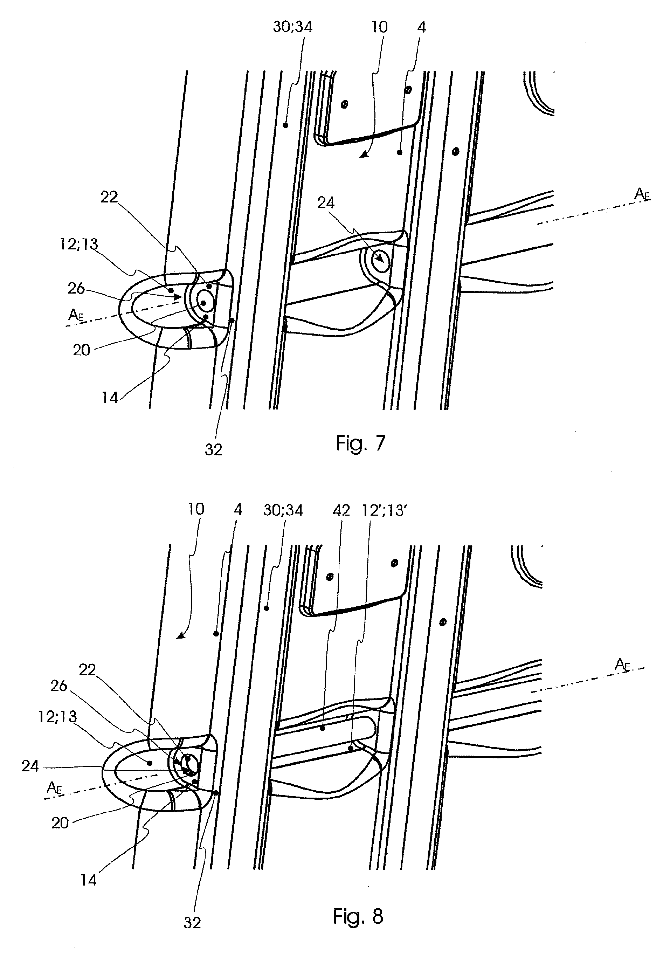

In den Fig. 7 und 8 sind die Bereiche in denen der Ringanker 42 geführt wird detailliert dargestellt wird. Dabei zeigt Fig. 7 diesen Bereich ohne einen eingesetzten Ringanker 42 und Fig. 8 denselben Bereich mit eingesetztem Ringanker 42.

Dargestellt ist wieder die Behälterwandung 4, die die zuvor genannten Einbuchtungen 12 und die Ausbuchtungen 30 bzw. die als Versteifungsrippen 34 ausgeführten Ausbuchtungen 30 aufweist. Beide Bereiche 12; 30 sind dabei integral mit der Behälterwandung 4, beispielsweise bei der Herstellung des Behälters 1 mittels Schleudergussverfahren hergestellt.

Die Einbuchtungen 12, die sich entlang der Erstreckungsachse A_{E} erstrecken, weisen jeweils an ihren Enden Stirnseitenwände 14 auf, die im Wesentlichen stetig in Seitenwände 32 der Ausbuchtungen 30 bzw. der Versteifungsrippen 34 übergehen.

Zwischen diesen Stirnseitenwänden 14 bzw. Seitenwänden 32 benachbarter Einbuchtungen 12 bzw. von diesen eingeschlossenen Ausbuchtungen 30 ist jeweils die Ringankerdurchführung 26 angeordnet.

Wie bereits vorher erwähnt, ist das in den Figuren 5 und 6 dargestellte Bügelelement 18 als ein Hülsenelement 20 ausgeführt, wobei eine Hülsenwandung 22 des Hülsenelementes 20 integral, bei dieser Ausführungsform jeweils im Wesentlichen zu gleichen Teilen, mit den Stirnseitenwänden 14 bzw. Seitenwänden 32 der Einbuchtungen 12 bzw. Ausbuchtungen 30 verbunden ist. Der Hülseninnenraum 24 ist dabei von der Außenseite 10 des Behälters 1 zugänglich und bildet die bereits zuvor beschriebene Ringankerdurchführung 26, über welche dann (s. Fig. 8) der Ringanker 42 geführt werden kann.

Dadurch, dass der Ringanker 42 im Bereich der Ausbuchtungen 30 über den Hülseninnenraum 24 durch das Hülsenelement 20 bzw. Bügelelement 18 verläuft, können durch den in den Fig. 5 und 6 gezeigten Zuganker 40 sehr viel größere Lasten übertragen werden, da die durch diesen in das Bügelelement 18 eingetragenen Lasten großflächig über den Ringanker 42 auf die angrenzenden Ausbuchtungen 12 und die darauf folgenden Versteifungsrippen 34 abgeleitet werden. Vorteilhafterweise verläuft dabei der Ringanker 42 wie bei dieser Ausführungsform zwischen wenigstens drei Versteifungsrippen 34, wobei an der mittleren Versteifungsrippe 34 der Zuganker 40 eingreift. Auf die Weise werden die vom Zuganker 40 eingetragenen Lasten gleichmäßig auf alle drei Versteifungsrippen verteilt.

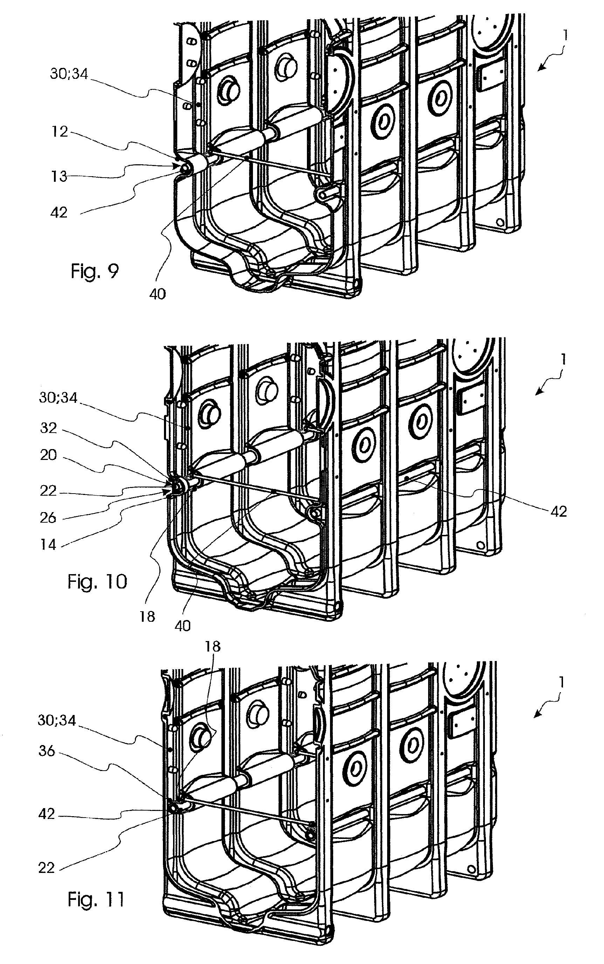

In den Fig. 9 bis 11 ist die zuvor beschriebene erfindungsgemäße Ausführungsform nun jeweils in einem Querschnitt dargestellt, wobei hier unterschiedliche Schnittebenen dargestellt sind.

So zeigt Fig. 9 den Behälter 1 in einem Querschnitt, der im Wesentlichen durch eine Einbuchtung 12 verläuft. Erkennbar ist die durch die Einbuchtung 12 gebildete Ringankeraufnahme 13, die den hier ebenfalls geschnitten dargestellten Ringanker 42 aufnimmt.

In Fig. 10 verläuft die Schnittebene im Vergleich zu Fig. 9 direkt im Anbindungsbereich zwischen Einbuchtung 12 (siehe Fig. 9) und Ausbuchtung 30 bzw. Versteifungsrippe 34. Erkennbar ist hier der stetige Verlauf der Stirnseitenwände 14 der Einbuchtungen 12 und der Seitenwände 32 der Ausbuchtung 30. Weiter erkennbar ist der durch das als Hülsenelement 20 (siehe Fig. 7 und 8) ausgeführte Bügelelement 18, das der Aufnahme des Zugankers 40 dient. Da, wie in den Fig. 7 und 8 dargestellt, das Bügelelement 18 über seine Hülsenwandung 22 integral mit den Stirnseitenwänden 14 verbunden ist, ist der Hülseninnenraum 24 von der Außenseite 10 des Behälters 1 (siehe Fig. 9) zugänglich und ermöglicht das Einsetzen des Ringankers 42 durch die in Folge gebildete Ringankerdurchführung 26.

In Fig. 11 verläuft schließlich die Schnittebene durch das Bügelelement 18, wodurch der Abstand 36 zwischen Bügelelement 18 und Ausbuchtung 30 bzw. Versteifungsrippe 34 deutlich sichtbar wird.

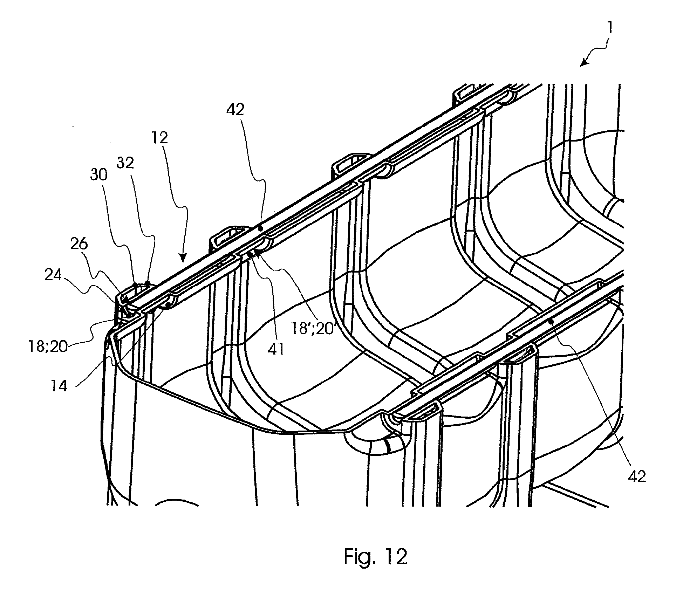

Fig. 12 schließlich zeigt einen Horizontalschnitt des erfindungsgemäßen Behälters 1, wobei die Schnittebene hier direkt im Bereich des Ringankers 42 angeordnet ist. Sichtbar ist das als Hülsenelement 20 ausgeführte Bügelelement 18, dass zwischen den Stirnseitenwänden 14 der Einbuchtung 12 bzw. den Seitenwänden 32 der Ausbuchtung 30 bzw. Versteifungsrippe 34 verläuft. Durch das als Hülsenelement ausgeführte Bügelelement 18 bildet sich im Inneren dieser Hülse durch den Hülseninnenraum 24 die bereits erwähnte Ringankerdurchführung 26.

### Bezugszeichen

- 1: Behälter
- 2: Behälteröffnung
- 4: Behälterwandung
- 6: Behälterinnenraum
- 8: Innenseite
- 10: Außenseite
- 12: Einbuchtung
- 13: Ringankeraufnahme
- 14: Stirnseitenwand
- 16: Aufnahmeabschnitt
- 18: Bügelelement
- 20: Hülsenelement
- 22: Hülsenwandung
- 24: Hülseninnenraum
- 26: Ringankerdurchführung
- 30: Ausbuchtung
- 32: Seitenwand
- 34: Versteifungsrippe
- 36: Abstand
- 40: Stabilisierungselement, insbesondere Zuganker
- 41: Hakenelement
- 42: Ringanker
- 44: Behälterfuß
- A_{E}: Erstreckungsachse
- A_{A}: Erstreckungsachse

## Patentansprüche

1. Behälter, insbesondere Kunststoffbehälter zur Lagerung von Heizöl oder ähnlichen Fluiden, mit Behälterwandungen (4), die einen Behälterinneraum (6) begrenzen,
**gekennzeichnet durch**
wenigstens zwei Aufnahmeabschnitte (16), von denen jeder jeweils an einer Innenseite (8) von zwei sich im Wesentlichen gegenüberliegenden Behälterwandungen (4) ausgebildet ist, zur insbesondere lösbaren Aufnahme eines zwischen den beiden Aufnahmeabschnitten (16) verlaufenden Stabilisierungselementes (40), insbesondere Zugankers.

2. Behälter nach Anspruch 1,
**dadurch gekennzeichnet, dass**
der Aufnahmeabschnitt (16) ein von der Innenseite (8) der Behälterwandung (4) beabstandetes Bügelelement (18) aufweist, dass von einem komplementär ausgebildeten Hakenelement (41) des Stabilisierungselementes (40) wenigstens teilweise umgreifbar ist.

3. Behälter nach einem der vorhergehenden Ansprüche, insbesondere nach Anspruch 2,
**dadurch gekennzeichnet, dass**
das Bügelelement (18) integral mit der Behälterwandung (4) ausgebildet ist.

4. Behälter nach einem der vorhergehenden Ansprüche, insbesondere nach einem der Ansprüche 2 oder 3,
**dadurch gekennzeichnet, dass**
das Bügelelement (18) zwischen zwei benachbarten Einbuchtungen (12) der Behälterwandung (4) und insbesondere zwischen zwei sich gegenüberliegenden Stirnseitenwänden (14) dieser Einbuchtungen (12) ausgebildet ist.

5. Behälter nach einem der vorhergehenden Ansprüche, insbesondere nach einem der Ansprüche 2 bis 4,
**dadurch gekennzeichnet, dass**
das Bügelelement (18) ein Hülsenelement (20) umfasst, dessen Hülsenwandung (22) integral mit der Behälterwandung (4) verbunden ist und dessen Hülseninneraum (24) eine von der Außenseite (10) des Behälters (1) zugängliche Ringankerdurchführung (26) bildet.

6. Behälter nach einem der vorhergehenden Ansprüche, insbesondere nach einem der Ansprüche 4 oder 5,
**dadurch gekennzeichnet, dass**
die Einbuchtung (12) der Behälterwandung (4) auf der Außenseite (10) des Behälters (1) als eine den Behälter (1) entlang einer Erstreckungsachse (A_{E}) wenigstens teilweise umlaufende Ringankeraufnahmen (13) ausgebildet ist.

7. Behälter nach einem der vorhergehenden Ansprüche, insbesondere nach einem der Ansprüche 4 bis 6,
**dadurch gekennzeichnet, dass**
zwischen zwei benachbarten Einbuchtungen (12) der Behälterwandung (4) eine Ausbuchtung (30) der Behälterwandung (4) vorgesehen ist.

8. Behälter nach einem der vorhergehenden Ansprüche, insbesondere nach Anspruch 7,
**dadurch gekennzeichnet, dass**
das Bügelelement (18) auf der Innenseite (8) des Behälters (1) wenigstens teilweise zwischen den Seitenwänden (32) der Ausbuchtung (30) ausgebildet ist.

9. Behälter nach einem der vorhergehenden Ansprüche, insbesondere nach einem der Ansprüche 7 oder 8,
**dadurch gekennzeichnet, dass**
die Seitenwände (32) der Ausbuchtung (30) im Wesentlichen stetig in die Stirnseitenwände (14) der Einbuchtungen (12) übergehen.

10. Behälter nach einem der vorhergehenden Ansprüche, insbesondere nach einem der Ansprüche 7 bis 9,
**dadurch gekennzeichnet, dass**
die Ausbuchtung (30) als eine, insbesondere orthogonal zur Erstreckungsachse (A_{E}) der Einbuchtungen (12), den Behälter (1) wenigstens teilweise umlaufende Versteifungsrippe (34) ausgebildet ist.

11. Behälter nach einem der vorhergehenden Ansprüche, insbesondere nach einem der Ansprüche 6 bis 10,
**gekennzeichnet durch**
wenigstens einen in wenigstens zwei Einbuchtungen (12) und insbesondere in den Ringankeraufnahmen (13) dieser Einbuchtungen (12) und wenigstens in der dazwischen liegenden Ringankerdurchführung (26) verlaufenden Ringanker (42).

12. Behälter nach einem der vorhergehenden Ansprüche,
**dadurch gekennzeichnet, dass**
der Behälter (1) aus einem Kunststoffmaterial besteht

13. Behälter nach einem der vorhergehenden Ansprüche,
**dadurch gekennzeichnet, dass**
der Behälter (1) ein einstückiger Behälter (1) ist.

14. Behälter nach einem der vorhergehenden Ansprüche,
**dadurch gekennzeichnet, dass**
der Behälter (1) ein mittels eines Schleudergussverfahrens hergestellter Behälter (1) ist.
